Europäisches Patentamt

(19) European Patent Office

Office européen des brevets

(11) Numéro de publication: **0 098 667**
**B1**

(12) **FASCICULE DE BREVET EUROPEEN**

(45) Date de publication du fascicule du brevet:
**28.10.87**

(21) Numéro de dépôt: **83200996.3**

(22) Date de dépôt: **05.07.83**

(51) Int. Cl.⁴: **G 01 S 7/06**, G 01 S 7/22

(54) **Dispositif de mémoire à inscription contrôlée destiné notamment à coopérer avec une unité de visualisation d'images radar.**

(30) Priorité: **07.07.82 FR 8211926**

(43) Date de publication de la demande:
**18.01.84 Bulletin 84/3**

(45) Mention de la délivrance du brevet:
**28.10.87 Bulletin 87/44**

(84) Etats contractants désignés:
**BE CH DE FR GB IT LI SE**

(56) Documents cités:
**EP - A - 0 032 836**
**EP - A - 0 038 102**
**EP - A - 0 066 319**
**FR - A - 2 198 151**
**GB - A - 2 052 910**
**US - A - 4 208 657**

**Le dossier contient des informations techniques présentées postérieurement au dépôt de la demande et ne figurant pas dans le présent fascicule.**

(73) Titulaire: **SOCIETE D'OPTIQUE, DE MECANIQUE D'ELECTRICITE ET DE RADIO O.M.E.R.A. - S.E.G.I.D., 49, rue Ferdinand Berthoud, F-95100 Argenteuil (FR)**

(84) Etats contractants désignés: **FR**

(73) Titulaire: **N.V. Philips' Gloeilampenfabrieken, Groenewoudseweg 1, NL-5621 BA Eindhoven (NL)**

(84) Etats contractants désignés: **BE CH DE GB IT LI SE**

(72) Inventeur: **Da Silva, Jean Paul Xavier, Société Civile S.P.I.D. 209, rue de l'Université, F-75007 Paris (FR)**
Inventeur: **Guiglini, Jean-Yves Maurice, Société Civile S.P.I.D. 209, rue de l'Université, F-75007 Paris (FR)**

(74) Mandataire: **Chaffraix, Jean et al, Société Civile S.P.I.D. 209, rue de l'Université, F-75007 Paris (FR)**

## Description

La présente invention concerne un dispositif de mémoire à inscription contrôlée destiné notamment à coopérer avec une unité de visualisation d'images radar, dispositif muni d'une mémoire dite: «mémoire principale» prévue pour contenir des mots d'information rangés selon un ensemble d'adresses, d'un circuit d'entrée comportant, d'une part, une sortie reliée à l'entrée d'information de la mémoire principale et, d'autre part, au moins une entrée pour recevoir un mot d'entrée susceptible d'être enregistré dans la mémoire principale à une adresse d'entrée.

De tels dispositifs utilisés avec des unités de visualisation d'images radar permettent d'obtenir une image dont la luminosité est indépendante de l'exploration radar. En effet, on inscrit dans la mémoire principale des mots d'information représentant l'amplitude de l'écho radar; l'adresse de chaque mot correspond à la position de l'écho sur l'image radar. Cette inscription se fait à un rythme lent déterminé par l'exploration radar. Pour obtenir une bonne image, on emploie un tube cathodique utilisé de la même manière qu'en télévision. Les informations vidéo sont alors les mots d'information qu'on vient lire dans la mémoire principale à un rythme rapide exigé par le balayage du tube cathodique.

Bien souvent, il arrive que le centre d'exploration radar se déplace, ce qui fait que les informations contenues dans la mémoire avant le déplacement peuvent gêner ou même tromper l'observateur qui devrait uniquement observer les images correspondant à la situation présente. Les informations contenues dans la mémoire principale doivent donc être mises à jour.

On connaît (voir la demande de brevet français n° 2 459 486) un dispositif du genre mentionné dans le préambule qui permet d'effectuer cette mise à jour. Ce dispositif connu comporte un circuit d'entrée formé, d'une part, d'un limiteur branché à la sortie de la mémoire dont la fonction est de diminuer la valeur du mot représentant l'amplitude de l'écho déjà enregistré et, d'autre part, d'un comparateur prévu pour comparer les valeurs des mots à la sortie du limiteur et du mot susceptible d'être enregistré; le mot finalement enregistré est celui qui a la plus forte valeur. Ainsi, les mots représentant les échos anciens diminuent de valeur en fonction du temps, ce qui se traduit sur l'écran de visualisation par un affaiblissement progressif.

L'inconvénient de ce dispositif connu est que pour obtenir cet affaiblissement progressif, il est nécessaire que les mots soient formés d'un assez grand nombre d'éléments binaires. Ce qui implique que la mémoire principale soit de grande capacité.

La présente invention propose un dispositif du genre cité dans le préambule qui autorise l'utilisation d'une mémoire de faible capacité.

Pour cela, un dispositif de mémoire à inscription contrôlée est remarquable en ce qu'il est prévu des emplacements de mémoire repérés par le même ensemble d'adresses et un circuit d'écriture dans ces emplacements pour y écrire un premier mot à la même adresse où un mot d'information est inscrit dans la mémoire principale et pour y écrire un deuxième mot sous la commande d'un signal dit de mise à jour à toutes les adresses dudit ensemble et en ce que le circuit d'entrée comporte un organe de commande pour qu'à la lecture, à la sortie de la mémoire principale, d'un mot d'information accompagné du deuxième mot, un mot d'information d'invalidation soit enregistré en mémoire principale à cette adresse.

Lesdits premier et deuxième mots peuvent être formés d'un seul élément binaire, de sorte que la mémoire utilisée est de très petite capacité.

La description suivante accompagnée des dessins annexés, le tout donné à titre d'exemple non limitatif, fera bien comprendre comment l'invention peut être réalisée.

La figure 1 représente un dispositif de mémoire conforme à l'invention.

La figure 2 représente, en fonction du temps, les instants d'écriture et de lecture de la mémoire.

La figure 3 représente la durée de mise à jour par rapport à une durée d'exploration radar.

La figure 4 montre une variante de réalisation du circuit d'entrée.

La figure 5 montre un radar comportant un dispositif conforme à l'invention.

La figure 6 montre un détail de réalisation d'un circuit faisant partie du radar de la figure 5.

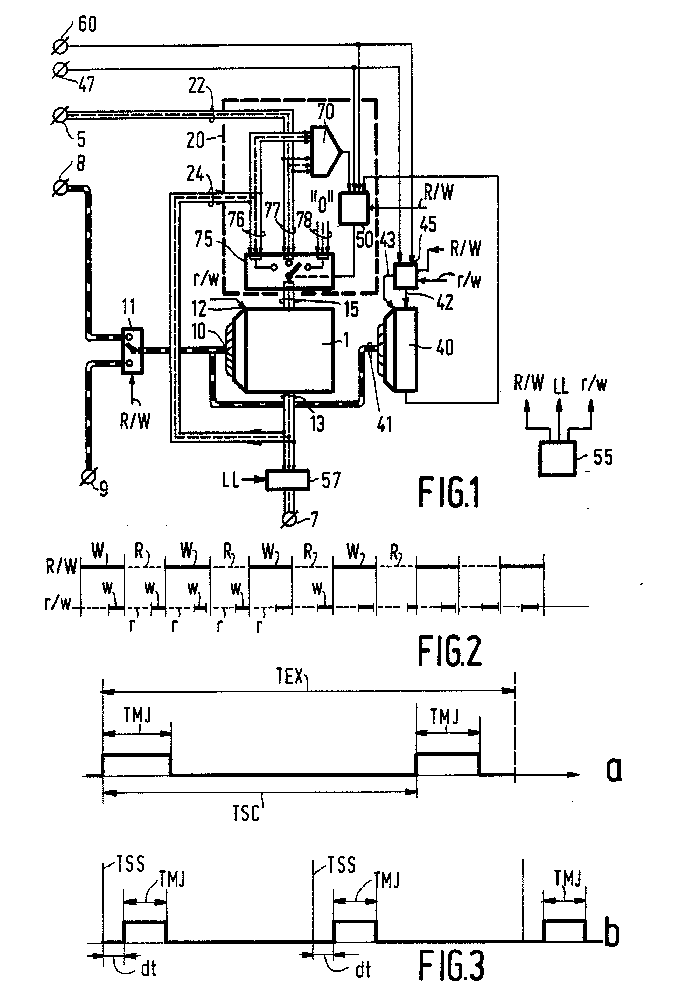

A la figure 1, on a représenté un dispositif conforme à l'invention. Ce dispositif est constitué à partir d'une mémoire 1, dite mémoire principale. Les informations d'entrée susceptibles d'être enregistrées dans la mémoire 1 apparaissent sur une borne 5 sous forme parallèle, tandis que les informations de sortie sont rendues disponibles à l'utilisateur à une borne 7. A chacune de ces informations d'entrée et de sortie est affectée une adresse. Les informations d'entrée susceptibles d'être enregistrées le seront à une adresse indiquée à une borne 8. Pour obtenir une information de sortie, il faudra fournir une adresse à une borne 9. La mémoire 1 comporte une seule entrée pour les codes d'adresses portant la référence 10. Cette entrée 10 est reliée aux bornes 8 et 9 par l'intermédiaire d'un commutateur 11. Une commande de lecture-écriture 12 permet de mettre cette mémoire en position de lecture ou d'écriture. En lecture, les informations sont rendues disponibles à sa sortie 13 et en écriture, les informations doivent être présentes à son entrée 15 pour être enregistrées. Un circuit d'entrée 20 sélectionne les informations à enregistrer dans la mémoire 1. Une première entrée 22 de ce circuit est connectée à la borne 5, une deuxième entrée 24 est connectée à la sortie 13 de la mémoire 1. La sortie de ce circuit est connectée à l'entrée 15 de la mémoire 1. La mémoire 1 peut être adressée par une adresse faisant partie de tout un ensemble d'adresses (par exemple de 0 à 32 767).

Conformément à une caractéristique de l'invention, il est prévu des emplacements de mémoires dans une mémoire 40 dite mémoire de mise à jour. Ces emplacements sont repérés par le même ensemble d'adresses; pour cela, l'entrée 41 d'adressage est connectée à l'entrée d'adressage 10 de la mémoire 1. Cette mémoire comporte une entrée d'information 42 et une commande d'écriture-lecture 43. Il est prévu aussi un circuit d'écriture 45 dans ces emplacement de mémoire pour y écrire un premier mot (par exemple un «1» binaire) à la même adresse où un mot d'information est inscrit dans la mémoire principale 1 et pour y écrire à toutes les adresses de l'ensemble un deuxième mot (dans ce même exemple un «0» binaire) sous la commande d'un signal de mise à jour apparaissant à la borne 47.

Le circuit d'entrée 20 comporte un organe de commande 50 pour qu'à la lecture, à la sortie de la mémoire principale, d'un mot d'information accompagné du deuxième mot (un «0»), un mot d'invalidation, un mot «0...0», soit enregistré à la place.

Avant d'expliquer le fonctionnement du dispositif de l'invention, il convient de signaler que dans l'exemple décrit, les mémoires 1 et 40 sont du type dynamique (MK 4027) fabriquées par MOSTEK. On définit des temps de lecture R (voir la figure 2) qui correspondent à des temps où c'est le code d'adresses à la borne 9 qui est appliqué aux entrées 10 et 41 des mémoires 1 et 40; un par un dans chaque intervalle R, successivement, tous les codes d'adresses définissant tous les emplacement des mémoires 1 et 40 vont être présents à la borne 9. Bien qu'appelés temps de lecture, il pourra y avoir aussi, comme on va le voir par la suite, écriture dans les mémoires 1 et 40. Les temps W, de même durée que les temps R, s'intercalent entre ces mêmes temps R et correspondent au fait que c'est le code d'adresses à la borne 8 qui se retrouve aux entrées d'adressage 10 et 41 des mémoires 1 et 40. Là aussi, avant d'écrire l'information à la borne 5, il peut y avoir une lecture de l'information contenue déjà dans la mémoire 1. Ainsi donc, chaque temps W et R est divisé en temps de lecture «r» et en temps d'écriture «w». Ces temps sont définis par une base de temps 55 fournissant les différents signaux sur des fils R/W pour définir les temps R et W et r/w pour les temps r et w. La commande de commutation du commutateur 11 est reliée au fil R/W et la commande 12 de lecture-écriture de la mémoire 1 est reliée au fil r/w. Le circuit 45 a deux entrées reliées aussi aux fils R/W et r/w. Dans le cadre de l'application au radar envisagé, les informations arrivent par intermittence à la borne 5, de sorte que chaque instant W ne sera pas employé pour écrire une information nouvelle, alors que la quasi-totalité des instants R sera utilisée pour fournir à l'utilisateur une information enregistrée différente. Cette information transite par un registre 57 interconnecté entre la sortie 13 de la mémoire 1 et la borne 7; ce registre 57 est commandé par les signaux du fil LL pour que les données soient envoyées vers la sortie pendant les temps R. Il faut remarquer que l'écriture d'un mot différent en mémoire pendant la partie w de R n'a pas d'influence immédiate sur le signal de sortie.

La mise à jour qui correspond à l'inscription de «0» dans la mémoire 40 à toutes ses adresses se fait pendant les temps de lecture R et dure un temps TMJ (voir figure 3a) bien plus court que le temps TEX durant lequel s'effectue une exploration radar. La figure 3a est relative à une exploration radar selon un balayage circulaire. La période d'apparition TSC des signaux de mise à jour est légèrement inférieure à TEX. La figure 3b est, quant à elle, relative à une exploration radar selon un balayage sectoral, les instants TSS correspondent aux changements de sens de l'exploration et les instants où apparaissent les temps de mise à jour surviennent un court laps de temps dt après les instants TSS. Les laps de temps dt correspondent au temps qu'il faut pour détecter les changements de sens d'exploration.

La mise à jour s'effectue alors de la manière suivante: au début des temps R, on lit l'information contenue dans la mémoire 1 à sa sortie 13, ainsi que le mot formé d'un élément binaire, à la sortie de la mémoire 40. Si cet élément binaire est «0», cela veut dire que depuis la dernière mise à jour aucune information nouvelle n'a été inscrite dans la mémoire 40 puisqu'à chaque inscription de la mémoire 1 correspond l'inscription d'un élément binaire «1» dans la mémoire 40. Le fait de trouver un mot d'information accompagné d'un élément binaire «0» à la sortie de la mémoire 40 provoque, durant ce même temps R, l'inscription d'un mot «0...0» correspondant à un effacement de l'information.

Une commande d'effacement 60 de la mémoire qui est reliée au circuit d'entrée 20, d'une part, et au circuit d'écriture 45, d'autre part, permet toujours, pendant les temps R, d'inscrire des mots «0...0» dans la mémoire 1 et des «0» dans la mémoire 40.

Le circuit d'entrée 20 peut contenir aussi un comparateur 70 pour comparer pendant les temps W l'information à la sortie de la mémoire 1 avec celle à enregistrer présente à la borne 5. Si l'information à la sortie 13 est accompagnée d'un élément binaire «1» à la sortie de la mémoire 40, l'information qui sera enregistrée est l'information de plus forte amplitude, si elle est accompagnée de l'élément «0», c'est l'information à la borne 5 qui est enregistrée.

L'organe de commande 50 provoque différentes commutations à l'intérieur d'un multiplexeur 75 en fonction des informations suivantes: temps de lecture ou d'écriture (R/W), commande de mise à jour (borne 47), commande d'effacement (borne 60), sortie du comparateur 70 et information de sortie de la mémoire 40. La sortie du multiplexeur 75 est connectée à l'entrée 15 de la mémoire 1. Le multiplexeur 75 est muni d'entrées 76, 77, 78. L'entrée 76 correspond à l'entrée 24 du circuit 20, l'entrée 77 à l'entrée 22, tandis que l'entrée 78 reçoit en permanence un signal représentant le mot d'invalidation «0...0». Le tableau 1 suivant résume le fonctionnement du circuit 50 qui peut être réalisé sous la forme d'une mémoire morte (ou de préférence d'un réseau logique programmé) pour laquelle lesdites informations constituent l'adresse (respectivement les entrées), les signaux de sortie de cette mémoire (de ce réseau) étant appliqués à l'entrée de commande du multiplexeur 75. Les signaux d'effacement et de mise à jour sont considérés comme actifs lorsqu'ils ont la valeur logique «1». La valeur «x» indique la valeur 1 ou 0 indifféremment.

Tableau I

| Mise à jour (47) | Efface-ment (60) | Sortie comparateur | Signal de sortie de la mémoire 40 | R/W | Commutation effectuée |
|---|---|---|---|---|---|
|  |  | × | × | R | 76–15 |
| 0 | 0 | [7] > [5]* | × | W | 76–15 |
|  |  | [5] > [7]* | × | W | 77–15 |
| × | 1 | × | × | R ou W | 78–15 |
|  |  | × | 0 | R | 78–15 |
|  |  | × | 1 | R | 76–15 |
| 1 | 0 | [7] > [5]* | × | W | 76–15 |
|  |  | [5] > [7]* | × | W | 77–15 |

\* Les [] signifient que l'on considère la grandeur du signal disponible à l'entrée 5 ou à la sortie 7, ces chiffres étant placés à l'intérieur des crochets.

Le circuit 45 doit réaliser les fonctions suivantes qui sont résumées dans le tableau II ci-dessous; pour faciliter la lecture de ce tableau, on a associé respectivement aux temps r et w les valeurs logiques «1» et «0». Ces valeurs ont la même signification pour l'entrée 43.

Tableau II

| Mise à jour (47) | Efface-ment (60) | R/W | r/w | Signal à l'entrée 43 | Signal à l'entrée 42 |
|---|---|---|---|---|---|
| 0 | 0 | R | 1 | 1 | × |
|  |  |  | 0 | 1 |  |
|  |  | W | 1 | 1 | × |
|  |  |  | 0 | 0 | 1 |
| 1 | 0 | R | 1 | 1 | × |
|  |  |  | 0 | 0 | 0 |
|  |  | W | 1 | 1 | 1 |
|  |  |  | 0 | 0 | 1 |
| × | 1 | R | 1 | 1 | × |
|  |  |  | 0 | 0 | 0 |
|  |  | W | 1 | 1 | × |
|  |  |  | 0 | 0 | 0 |

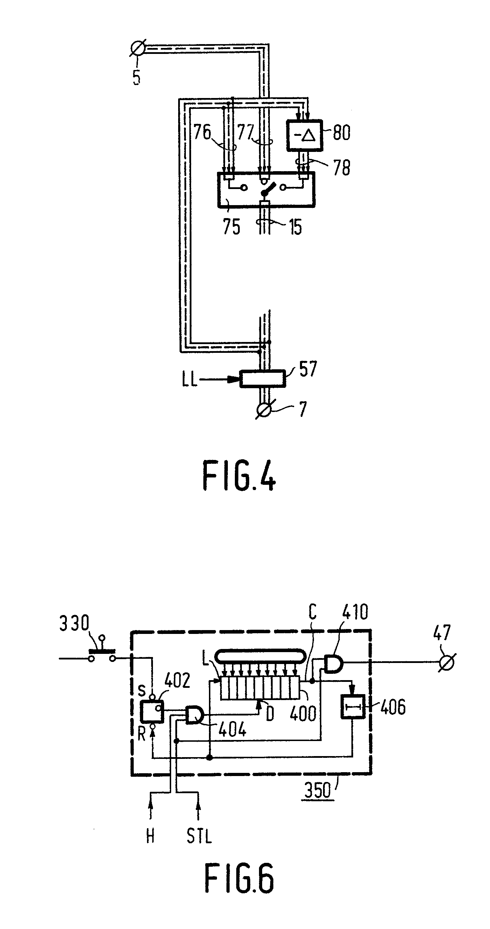

L'invention permet, si l'on veut, d'obtenir l'effacement progressif des échos; pour cela, on intercale entre la sortie 13 et l'entrée 78 un soustracteur 80. Ceci est représenté à la figure 4.

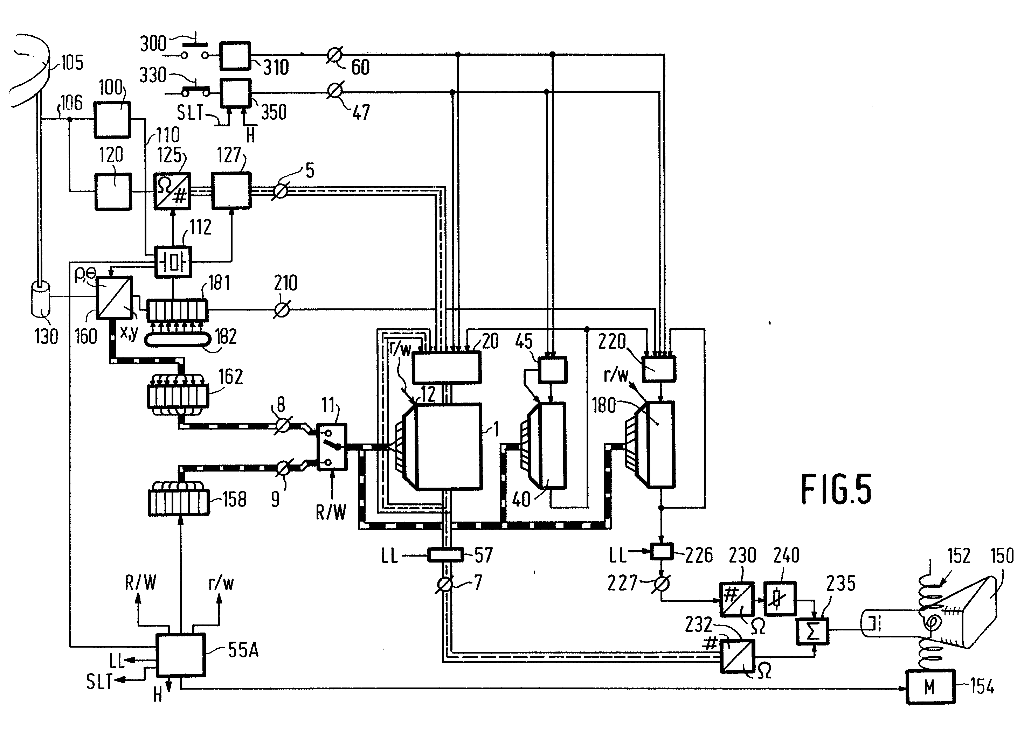

A la figure 5, on a représenté un radar comportant un dispositif de l'invention, les éléments communs avec ceux des figures précédentes portent les mêmes références.

Ce radar travaille par impulsions haute fréquence; ces impulsions sont élaborées au moyen d'une partie émission 100 constituée, par exemple, à partir d'un magnétron. Les impulsions haute fréquence sont transmises à une antenne mobile 105 via un duplexeur 106. La partie 100 fournit sur un fil 110 un signal indiquant le temps où se produit l'émission de l'impulsion. Ce signal est utilisé pour synchroniser une base de temps 112. L'impulsion réfléchie par un obstacle est captée par l'antenne 105 et transmise à la partie réception 120 via le même duplexeur 106. Le signal représentant l'amplitude de l'onde réfléchie par l'obstacle est converti en un signal numérique au moyen d'un convertisseur analogique-numérique 125; le code représentant ce signal numérique est mis ensuite dans une mémoire tampon 127, ce qui le rend disponible pour la borne 5. Les rythmes de conversion du convertisseur 125 et d'emmagasinage de la mémoire 127 sont fixés par la base de temps 112. L'antenne mobile 105 subit un mouvement de rotation dont l'angle est mesuré par un convertisseur d'angle 130. L'information d'angle combinée avec des informations de temps fournies par la base de temps 112 fournit alors la position, en coordonnées polaires $(\rho, \theta)$, de l'écho. Le radar montré à cette figure 5 est prévu pour une visualisation par un tube cathodique 150 du genre télévision. A ce tube est rattaché un bloc de déviation magnétique de lignes et de trames 152 attaqué par un générateur de courant en dent de scie 154. La base de temps qui porte ici la référence 55A fournit des codes d'adresses de lecture pour la mémoire, par l'intermédiaire d'un registre 158 dont les sorties sont connectées à la borne 9. Elle fournit, de plus, des signaux d'horloge sur le fil H et les signaux de suppression ligne et trame sur le fil SLT. La base de temps 55A est couplée avec la base de temps 112 pour que les données soient présentées aux bons instants à la mémoire principale 1. Elle synchronise le générateur de courant en dent de scie 154. Comme la visualisation s'effectue selon un système en coordonnées dit «x, y», il est nécessaire d'utiliser un dispositif de transformation de coordonnées 160 pour transformer les informations du dispositif 130 et les informations de temps fournies par la base de temps 112. Le code d'adresses d'écriture ainsi obtenu est emmagasiné dans un registre 162.

Selon une caractéristique importante d'un mode de réalisation de l'invention, la mémoire de mise à jour 40 peut être accouplée à une deuxième mémoire dite mémoire de marqueur portant la référence 180. Cette mémoire est destinée à emmagasiner des informations de marqueur de distance, ce qui se traduit sur le tube 150 par des points brillants désignant une distance déterminée; pour déterminer ces distances, on utilise un compteur 181 qui est chargé d'un nombre élaboré par une unité de marqueur 182. Ce nombre représente la distance entre les marqueurs que l'on veut visualiser. Le chargement de ce nombre a lieu à l'instant correspondant à $\rho = 0$ défini par l'unité 160 et aussi chaque fois que le compteur atteint sa position minimale; la base de temps 112 fournit les signaux de décomptage à ce compteur; dès que le compteur atteint sa position minimale, un signal apparaît à une borne 210 représentant les points brillants à visualiser. La borne 210 est connectée à un circuit d'entrée 220 de structure identique à celle du circuit 20 et dont le fonctionnement est le même que celui résumé au tableau 1 ci-dessus. Le signal à la sortie de la mémoire de marqueur 180 est rendu disponible, par l'intermédiaire d'un registre 226 commandé de la même manière que le registre 57, à une borne 227. Ce signal est appliqué à un convertisseur numérique-analogique 230 comme le signal de sortie de la mémoire 1, disponible à la borne 7, est appliqué à un convertisseur numérique-analogique 232. Avant d'être combiné au moyen d'un sommateur 235 avec le signal de sortie du convertisseur 232, le signal de sortie du convertisseur 230 est appliqué à un dispositif potentiométrique 240 pour faire varier la brillance des marqueurs sur l'écran du tube 150, la sortie du sommateur 235 étant connectée à la cathode de ce tube 150.

Pour effectuer un effacement des mémoires 1, 40, 180, on a prévu une commande d'effacement 300 agissant, par exemple, sur un circuit monostable 310 qui est connecté à la borne 60 et dont la période est telle qu'elle correspond à la durée d'un cycle de lecture de ces mémoires; de même, pour la mise à jour, on a prévu une autre commande 330 agissant sur un circuit 350 connecté à la borne 47. Il est bien évident que ce circuit peut être déclenché par le codeur d'angle 130 à un peu moins de chaque tour de l'antenne 105, ou bien alors quand celle-ci change de sens de rotation en cas d'un balayage sectoral.

La figure 6 montre en détail ce circuit d'élaboration du signal de mise à jour 350; il se compose essentiellement d'un compteur 400 dont la capacité est telle qu'elle correspond au temps de mise à jour, compte tenu de la fréquence des signaux disponibles sur le fil H. Une bascule RS portant la référence 402 permet de rendre ouverte un porte ET 404 dès que la commande 330 est actionnée;

cette commande est reliée à l'entrée S de cette bascule. Comme la porte 404 est ouverte, les impulsions du fil H sont appliquées à l'entrée de comptage D du compteur 400, en dehors des temps de retour trames et de retour lignes du tube 150. Ces temps sont définis par des signaux STL élaborés par la base de temps 55A. Dés que le compteur 400 a fini son cycle de comptage, le signal à la sortie C change de valeur, par exemple prend la valeur «0»; ceci déclenche un monostable 406 qui fournit alors une impulsion appliquée, d'une part, à l'entrée R de la bascule pour la mettre à l'état de repos et, d'autre part, à l'entrée de chargement L du compteur 400 pour lui faire prendre son état initial; une porte ET 410 fournit le signal de mise à jour à la borne 47; une de ses entrées est connectée à la sortie C du compteur 400 et une autre au fil STL, de sorte que le signal de mise à jour n'est pas fourni pendant les durées de retour de trames et lignes.

## Revendications

1. Dispositif de mémoire à inscription contrôlée destiné notamment à coopérer avec une unité de visualisation d'images radar, dispositif muni d'une mémoire dite «mémoire principale» prévue pour contenir des mots d'information rangés selon un ensemble d'adresses, d'un circuit d'entrée principal comportant, d'une part, une sortie reliée à l'entrée d'information de la mémoire principale et, d'autre part, au moins une entrée pour recevoir un mot d'entrée susceptible d'être enregistré dans la mémoire principale à une adresse d'entrée, caractérisé en ce qu'il est prévu des emplacements de mémoire repérés par le même ensemble d'adresses et un circuit d'écriture dans ces emplacements pour y écrire un premier mot à la même adresse où un mot d'information est inscrit dans la mémoire principale et pour y écrire un deuxième mot sous la commande d'un signal dit de mise à jour à toutes les adresses dudit ensemble, en ce que le circuit d'entrée principal comporte un organe de commande pour qu'à la lecture, à la sortie de la mémoire principale d'un mot d'information accompagné du deuxième mot, un mot d'information d'invalidation soit enregistré en mémoire principale à cette adresse.

2. Dispositif de mémoire à inscription contrôlée selon la revendication 1, caractérisé en ce que lesdits emplacements de mémoire sont prévus dans une mémoire dite «mémoire de mise à jour» distincte de la mémoire principale.

3. Dispositif de mémoire à inscription contrôlée selon la revendication 1 ou 2, caractérisé en ce que lesdits premier et deuxième mots sont des mots à un élément binaire de valeurs opposées.

4. Dispositif de mémoire à inscription contrôlée selon l'une des revendications 1 à 3, coopérant avec une unité de visualisation d'images radar pour lequel les mots d'entrées sont fournis au rythme d'une exploration radar du type sectorale ou circulaire, caractérisé en ce qu'il est prévu des moyens pour engendrer ledit signal de mise à jour au moins une fois pour chaque nouvelle exploration radar.

5. Dispositif de mémoire à inscription contrôlée selon l'une des revendications 1 à 3, coopérant avec une unité de visualisation d'images radar pour lequel les mots d'entrées sont fournis au rythme d'une exploration radar circulaire, caractérisé en ce qu'il est prévu des moyens pour engendrer ledit signal de mise à jour avec une période qui est plus courte que celle de la rotation de l'antenne radar.

6. Dispositif de mémoire à inscription contrôlée selon l'une des revendications 1 à 5, caractérisé en ce qu'il est prévu une mémoire supplémentaire (180) destinée à emmagasiner notamment des informations provenant d'une source d'informations de marqueurs (181–182) pour agir sur l'unité de visualisation de façon à distinguer des points correspondant à des distances déterminées et en ce qu'il est associé à cette mémoire un circuit d'entrée supplémentaire (220) analogue au circuit d'entrée de la mémoire principale.

## Claims

1. A memory arrangement with ordered writing, particularly intended to cooperate with a radar image display unit, the arrangement comprising a memory commonly referred to as a «main memory», which is provided to store data words arranged in accordance with a set of addresses, a main input circuit having an output connected to the data input of the main memory and also at least one input for receiving an input word intended to be stored in the main memory at an input address, characterized in that memory locations are provided indicated by the same set of addresses, and a write circuit for writing in these locations a first word at the same address where a data word is written in the main memory and for writing in these locations a second word under the control of a so-called updating signal in all the addresses of the said set, and that the input main circuit comprises a control element to provide that, at reading at the output of the main memory of a data word accompanied by the second word, an invalidation data word is written into the main memory at this address.

2. A memory arrangement with ordered writing as claimed in Claim 1, characterized in that the said memory locations are provided in a so-called «updating memory» which is separate from the main memory.

3. A memory arrangement with ordered writing as claimed in Claim 1 or 2, characterized in that the said first and second words are words in the form of a binary element having opposite values.

4. A memory arrangement with ordered writing as claimed in anyone of the Claims 1 to 3, which cooperates with a radar image display unit for which the input words are supplied at the rate of a radar scan of the sectorial or the circular type, characterized in that means are provided to generate the said updating signal at least at each new radar scan.

5. A memory arrangement with ordered writing as claimed in any one of the Claims 1 to 3, which cooperates with a radar image display unit for which the input words are supplied at the rate of a circular radar scan, characterized in that means are provided for generating the said updating signal with a period which is shorter than the antenna rotation.

6. A memory arrangement with ordered writing as claimed in any one of the Claims 1 to 5, characterized in that an additional memory (180) is provided which is provided to store more specifically data coming from a marker data source (181–182) to act on the display unit so as to distinguish the points corresponding to predetermined distances and that an additional input circuit (220) which is similar to the input circuit of the main memory is associated with this memory.

## Patentansprüche

1. Speicheranordnung mit gesteuertem Einschreiben insbesondere für ein Radar-Sichtanzeigegerät, die mit einem als Hauptspeicher bezeichneten Speicher versehen ist, der zum Speichern von Datenworten vorgesehen ist, die entsprechend einem Adressensatz gegliedert sind, weiterhin mit einem Haupteingangskreis, der einerseits mit einem Ausgang versehen ist, der mit dem Dateneingang des Hauptspeichers verbunden ist und andererseits mit mindestens einem Eingang zum Erhalten eines Eingangswortes, das in dem Hauptspeicher auf einer Eingangsadresse gespeichert werden soll, dadurch gekennzeichnet, dass Speicherstellen vorgesehen sind, die durch denselben Adressensatz bezeichnet werden und ein Einschreibekreis zum an diesen Adressenstellen Einschreiben eines ersten Wortes an derselben Adresse, an der in dem Hauptspeicher ein Datenwort eingeschrieben ist und zum darin Einschreiben eines zweiten Wortes unter Ansteuerung eines sogenannten Aktualisierungssignals an allen Adressen des genannten Satzes und dass der Haupteingangskreis ein Steuerelement aufweist, damit beim an dem Ausgang des Hauptspeichers Auslesen eines Datenwortes, das von dem zweiten Wort begleitet wird, an dieser Adresse in den Hauptspeicher ein Ungültigkeitsdatenwort eingeschrieben wird.

2. Speicheranordnung mit gesteuertem Einschreiben nach Anspruch 1, dadurch gekennzeichnet, dass die genannten Speicherstellen in einem Speicher vorgesehen sind, der als Aktualisierungsspeicher bezeichnet wird und separat vom Hauptspeicher vorgesehen ist.

3. Speicheranordnung mit gesteuertem Einschreiben nach Anspruch 1 oder 2, dadurch gekennzeichnet, dass die genannten ersten und zweiten Worte Worte mit einem binären Element mit entgegengesetzten Werte sind.

4. Speicheranordnung mit gesteuertem Einschreiben nach einem der Ansprüche 1 bis 3, die mit einem Radar-Sichtanzeigegerät zusammenarbeitet, wobei für diese Anordnung die Eingangsworte mit der Frequenz einer Rundsicht- oder Sektorsichtradarabtastung geliefert werden, dadurch gekennzeichnet, dass Mittel vorgesehen sind, um bei jeder neuen Radarabtastung mindestens einmal das genannte Aktualisierungssignal zu erzeugen.

5. Speicheranordnung mit gesteuertem Einschreiben nach einem der Ansprüche 1 bis 3, die mit einem Radar-Sichtanzeigegerät zusammenarbeitet, wobei für diese Anordnung die Eingangsworte mit der Frequenz einer Rundsichtradarabtastung geliefert werden, dadurch gekennzeichnet, dass Mittel vorgesehen sind, um das genannte Aktualisierungssignal mit einer Periode zu liefern, die kürzer ist als die der Drehung der Radarantenne.

6. Speicheranordnung mit gesteuertem Einschreiben nach Ansprüchen 1 bis 5, dadurch gekennzeichnet, dass ein zusätzlicher Speicher (180) vorgesehen ist zum insbesondere Speichern von Daten, die von einer Markierungsdatenquelle (181–182) herrühren, um das Sichtanzeigegerät derart zu beeinflussen, dass Punkte unterschieden werden, die festgestellten Abständen entsprechen und dass mit diesem Speicher ein zusätzlicher Eingangskreis (220) entsprechend dem Eingangskreis des Hauptspeichers verbunden ist.

FIG.1

FIG.2

FIG.3

FIG.4

FIG.6

FIG.5

0 098 667